# EUROPEAN PATENT APPLICATION

(11) **EP 2 592 320 A1**
(43) Date of publication of application: **15.05.2013**
(21) Application number: 12192562.2
(22) Date of filing: 14.11.2012
(51) Int. Cl.: F16L 3/10, F16L 55/035

(54) **Duct clamp**

(30) Priority: 14.11.2011 US 201113295687
(71) Applicant: United Technologies Corporation, Hartford, CT 06101 (US)
(72) Inventor: Utay, Arthur W., South Windsor, CT Connecticut 06074 (US)
(74) Representative: Tomlinson, Kerry John

(57) **Abstract**

A duct clamp assembly (10, 10B) comprises a polygonal clamp (12, 12B), a fastener (16, 16B), and a mounting piece (14, 14B). The polygonal clamp is a clamp formed from two clamp halves (18), each having a plurality of flat sides (20) constructed to bow in contact with a duct (D). The fastener holds the two clamp halves together. The mounting piece is attached to the polygonal clamp, and configured to attach to a support structure.

## Description

### BACKGROUND

The present invention relates generally to duct clamps, and more particularly to lightweight duct clamp assemblies tuned to handle specific vibration conditions.

Cylindrical ducts are used in a wide range of applications, including aircraft air systems. These ducts are conventionally secured via circular or semicircular duct clamps with deformable clamp pads. Conventional clamps are attached with mounting pieces to an immobile support structure such as a case or wall, so that secured ducts cannot shift or detach.

Conventional duct clamps have rigid cylindrical or ring-shaped frames typically constructed of two or more pieces of cast, forged, or machined metal connected by hinges or bolts. The inner surfaces of these rigid cylindrical frames are covered by deformable clamp pads, which are usually formed of rubber. Clamp pads fit inside duct clamp frames, between the rigid frame of the clamp and a duct to be secured. When this kind of duct clamp is closed and tightened about a duct (with, for instance, a latch or bolt), the clamp pad is squeezed and deformed about the duct. Duct clamps of this construction provide limited protection against duct vibration and translation, and typically comprise a plurality of parts which add considerable cost and weight to the duct assembly. There exists a need for lighter, more cost-effective duct clamps capable of increased vibration control.

### SUMMARY

The present invention is directed toward a duct clamp assembly having a polygonal clamp, a fastener, and a mounting piece. The polygonal clamp is clamp formed from two clamp halves, each having a plurality of flat sides constructed to bow in contact with a duct. The fastener holds the two clamp halves together. The mounting piece is attached to the polygonal clamp, and configured to attach to a support structure.

### BRIEF DESCRIPTION OF THE DRAWINGS

FIG. 1 is a cross-sectional view of a duct clamp assembly attached to a duct.

FIG. 2A is an exploded perspective view of one embodiment of the duct clamp assembly of FIG. 1

FIG. 2B is an unexploded perspective view of the duct clamp assembly of FIG. 1.

FIG. 3 is a perspective view of an exemplary alternative duct clamp assembly of the present invention.

### DETAILED DESCRIPTION

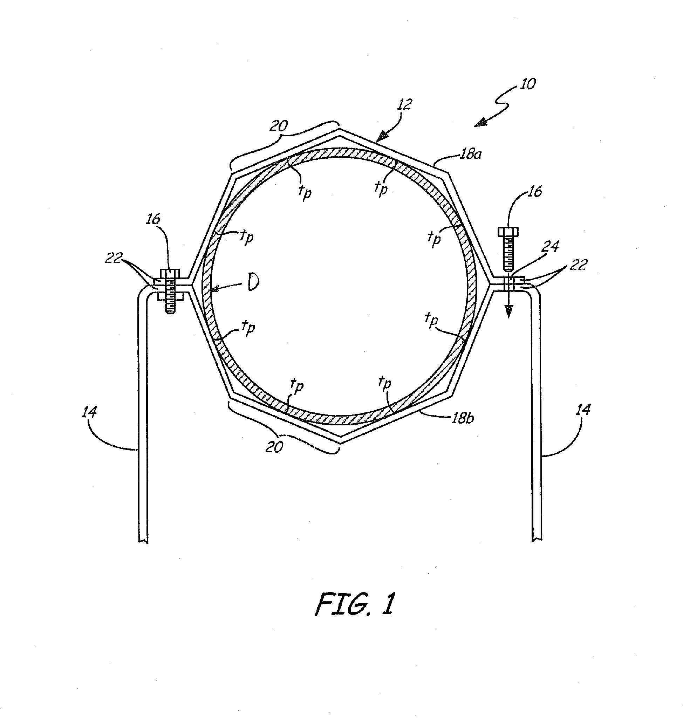

FIG. 1 is a cross-sectional view of duct clamp assembly 10 supporting and restraining duct D. Duct clamp assembly 10 comprises polygonal clamp 12, mounting pieces 14, and fasteners 16. Polygonal clamp 12 is formed of two clamp halves 18 (including top half 18a and bottom half 18b), each having a plurality of straight sides 20, and two bolt tabs 22 with bolt holes 24.

Each clamp half 18 is formed in a single piece. In some embodiments, clamp halves 18 are stamped from sheet metal. Clamp halves 18 fit together such that bolt tabs 22 of each clamp half 18 meet, and straight sides 20 form a regular polygon. In the depicted embodiment, polygonal clamp 12 has eight straight sides 20 (four to each clamp half 18), although other embodiments may use other numbers of sides (e.g. hexagonal or decagonal clamps). In some embodiments, clamp halves 12 are substantially identical pieces for manufacturing efficiency. In other embodiments, clamp halves 12 may exhibit differences such as different threading at bolt holes 24 or different gussets or tuning holes 34, as described below.

Fasteners 16, which may for instance be screws or bolts, pass through bolt holes 24 to secure top half 18a to bottom half 18b, clamping polygonal clamp 12 about duct D. Duct D is a rigid duct, such as found in an aircraft air system. Duct D may be formed of a non-rusting metal such aluminum or stainless steel. As depicted in FIG. 1, one fastener 16 has been inserted, while another has not. In some embodiments fasteners 16 may include both a bolt and a nut, as shown; in other embodiments, fasteners 16 may be screws which thread directly into clamp halves 18. When polygonal clamp 12 is closed, each straight side 20 abuts duct D at a tangent point *tp,* as shown. Each tangent point *tp* is located at the center of a straight side 20. Straight sides 20 may bow slightly about tangent points *tp* when in contact with duct D. This bowing produces a spring force which increases the clamping strength of polygonal clamp 12 by increasing the force exerted by straight sides 20 on duct D at tangent points *tp.* In this way, polygonal clamp 12 is able to provide a tight clamp without a conventional clamp pad. Polygonal clamp 12 is clamped about duct D by arranging clamp halves 18 around duct D and tightly securing fastener 16 through bolt holes 24 of tabs 22.

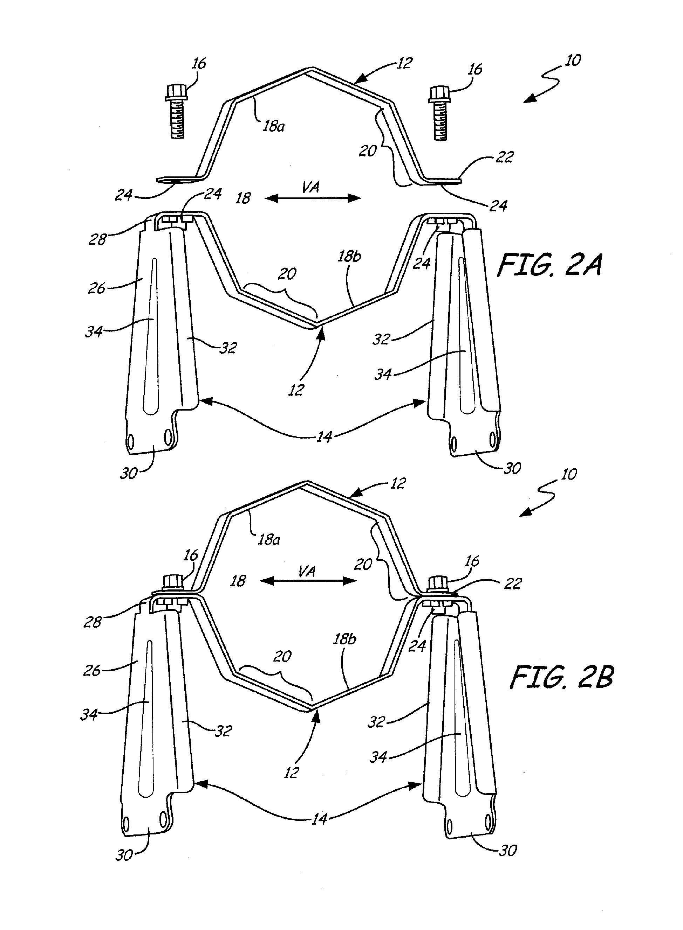

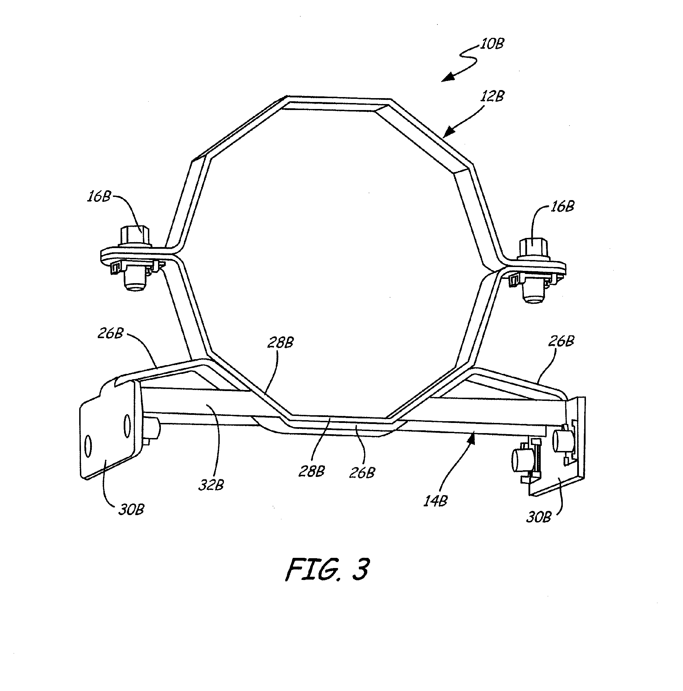

Polygonal clamp 12 is connected to a support structure such as a case or wall (not shown) via mounting pieces 14, as described below with respect to FIGs. 2 and 3. Each mounting piece 14 is an elongated arm formed from a single piece. In some embodiments, mounting pieces 14 are stamped from sheet metal. In the embodiment depicted in FIG. 1, mounting pieces 14 are formed in one piece with clamp half 18b. In other embodiments, mounting pieces 14 may be formed separately and affixed to polygonal clamp 12 by bolts or screws, welds, or other conventional attachment mechanisms. In some embodiments, fasteners 16 may attach mounting pieces 14 to polygonal clamp 12, in additional to securing clamp halves 18 together. Mounting pieces 14 are constructed with features such as flanges, gussets, and holes to restrain duct D with required or desired stiffness along relevant axes, as described below with respect to FIGs. 2A and 2B.

Polygonal clamp 12 and mounting piece 14 together provide a low-cost, high-strength, low-weight mechanism for securing duct D against vibration or translation, particularly along axes against which mounting piece 14 is strengthened.

FIGs. 2A and 2B are perspective views of duct clamp assembly 10. FIG. 2A is an exploded view of duct clamp assembly 10, while FIG. 2B is an unexploded view of the same. Duct clamp assembly 10 comprises polygonal clamp 12, mounting pieces 14, and fasteners 16. Polygonal clamp 12 is formed of two clamp halves 18, each having a plurality of straight sides 20, and two bolt tabs 22 with bolt holes 24. Each mounting pieces 14 has piece body 26, clamp connection point 28, structural attachment location 30, and ribs or flanges 32. Polygonal clamp 12 and mounting pieces 14 may both have a plurality of gussets or tuning holes 34.

As described above with respect to FIG. 1, fasteners 16 secure clamp halves 18 together to clamp duct D. Mounting pieces 14 extend from polygonal clamp 12 to a case or wall to secure duct D against translation or vibration. Each mounting piece 14 is attached to at least one clamp half 18 at clamp connection point 28. As depicted, mounting pieces 14 are stamped sheet metal extensions of one clamp half 18, such that clamp connection point 28 is a strip of shared sheet metal joining clamp half 18 with mounting piece 14. In other embodiments, mounting pieces 14 are separate components welded or bolted to at least one clamp half 18 at clamp connection point 28 (see FIG. 3). Each mounting pieces 14 attaches to a flange, boss, or similar element of a support structure such as a case or wall at structural attachment locations 30. As shown, structural attachment locations 30 are flat plates with bolt holes for screwing or bolting mounting pieces 14 to said flange or boss. In other embodiments, structural attachment locations 30 may be weld locations, secondary clamps, or other features which allow mounting pieces 14 to be affixed to a support structure.

Mounting pieces 14 must support the weight of any duct held by polygonal clamp 12. Some degree of flexibility may be desirable in mounting pieces 14, to allow for slight duct movements. In many cases, however, mounting pieces 14 must restrain ducts against translation and vibration. Where directions of vibration or translation are known, mounting pieces 14 can be tuned to provide greater stiffness in these directions. Ribs or flanges 32 are portions of each mounting piece 14 which extend from and are angled relative to body 26 of mounting piece 14. As shown, ribs or flanges 32 increase the stiffness of mounting pieces 14 along vibration axis VA, helping to limit duct translation or vibration along that axis. Other embodiments of mounting pieces 14 may be constructed according to the same principles, to restrict duct movement in other or additional dimensions (see, e.g. FIG. 3, below). The stiffness provided by ribs or flanges 32 is a function of the angle of each rib or flange 32 relative to piece body 26, with the greater stiffness where rib or flange 32 is close to perpendicular to piece body 26, and comparatively little stiffness where rib or flange 32 is only slightly angled relative to piece body 26. The stiffness of mounting pieces 14 can thus be tuned along desired axes by varying the angles of ribs or flanges 32. Stiffness can be further tuned by adding holes or gussets 34 to the piece body 26, as shown. Gussets provide increased stiffness, while holes decrease stiffness, as is well known in the art. Holes or gussets 34 may also be added to polygonal clamp 12 to increase clamp stiffness.

FIG. 3 is a perspective view of duct clamp assembly 10B, an alternative embodiment of duct clamp assembly 10 of FIGs 2A and 2B. Duct clamp assembly 10B includes polygonal clamp 12B, mounting piece 14B, and fasteners 16B. Polygonal clamp 12B is substantially identical to polygonal clamp 12 (see FIGs. 2A and 2B), and is comprised of two halves joined together by fasteners 16B. Although polygonal clamp 12B is depicted as a decagonal clamp, polygonal clamp 12B may have any suitable number of regular sides, including eight (see polygonal clamp 12 in FIGs 1, 2A and 2B).

Mounting piece 14B has piece body 26B, clamp connection points 28B, structural attachment locations 30B, and ribs or flanges 32B. Where duct clamp assembly 10 comprised two mounting pieces 14 formed as integral extensions of clamp half 18b, duct clamp assembly 10B comprises a single separate mounting piece 14B which is separately attached to polygonal clamp 12 clamp connection points 28B. Body piece 26B abuts at least a portion of polygonal clamp 12. In the depicted embodiment, clamp connection points 28B are welds along the interface of mounting piece 14B and polygonal clamp 12B. In alternative embodiments, clamp connection points 28B may be bolts or other attachment mechanisms which affix mounting piece 14B to polygonal clamp 12B. Structural attachment locations 30B are flat plates fastenable to an adjacent support structure such as a case or wall. In the depicted embodiment, structural attachment locations 30B feature bolt holes for screws or bolts. In other embodiments, structural attachment locations 30B may be welded directly to the adjacent support structure.

Mounting piece 14B includes ribs or flanges 32B, which extend from body piece 26B to structural attachment locations 30B. In some embodiments, ribs or flanges 32B may be welded or otherwise attached to structural attachment locations 30B, to further strengthen mounting piece 14B. Ribs or flanges 32B increase the rigidity of duct clamp assembly 10B, retaining duct D (see FIG. 1) against translation and vibration. Ribs or flanges 32B provide greater rigidity than ribs or flanges 32, restraining duct D against motion in all directions.

The duct assemblies of the present invention retain duct D against translation and vibration along at least one axis. Different mounting pieces (e.g. 14, 14B) provide different degrees of retention stiffness in different directions. These duct assemblies (e.g. 10, 10B) are formed of stamped sheet metal, and are therefore both light and inexpensive. Polygonal clamps (e.g. 10, 10B) provide strong clamping without need for clamp pads or complex clamping rings.

While the invention has been described with reference to an exemplary embodiment(s), it will be understood by those skilled in the art that various changes may be made and equivalents may be substituted for elements thereof without departing from the scope of the invention, which is defined by the claims. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A duct clamp assembly (10,10B) comprising:
a polygonal clamp (12,12B) formed from two clamp halves (18), each having a plurality of flat sides (20) constructed to bow in contact with a duct (D);
a fastener (16,16B) which holds the two clamp halves together; and
a mounting piece (14,14B) attached to the polygonal clamp and configured to attach to a support structure.

2. The duct clamp assembly of claim 1, wherein the polygonal clamp and the mounting piece are formed from stamped sheet metal.

3. The duct clamp assembly of claim 2, wherein one clamp half and the mounting piece are formed from a single continuous piece of stamped sheet metal.

4. The duct clamp assembly of claim 1 or 2, wherein the polygonal clamp and the mounting piece are attached by a weld.

5. The duct clamp assembly of claim 1 or 2, wherein the polygonal clamp and the mounting piece are attached by a threaded fastener, and preferably wherein the threaded fastener is the fastener which holds the two clamp halves together.

6. The duct clamp assembly of any preceding claim, wherein the fastener is a bolt secured by a nut.

7. The duct clamp assembly of any of claims 1 to 5, wherein the fastener is a screw threaded into at least one clamp half.

8. The duct clamp assembly of any preceding claim, wherein the polygonal clamp has 8 or 10 sides.

9. The duct clamp assembly of any preceding claim, wherein the mounting piece includes strengthening flanges or ribs (32,32B) selected to provide the mounting piece with rigidity along at least one axis of vibrational (VA) or translational concern.

10. The duct clamp assembly of any preceding claim, wherein at least one of the mounting piece or the polygonal clamp has holes or gussets (34) selected to increase or decrease rigidity by a desired amount.

11. A duct assembly comprising the duct clamp assembly of any preceding claim, further comprising a rigid cylindrical duct (D), and wherein:
the two clamp halves comprise a first polygonal clamp half (18a) having a first plurality of flat sides (20) and a first bolt tab (22); and a second polygonal clamp half (18b) having a second plurality of flat sides and a second bolt tab (22);
the fastener is configured to secure the first bolt tab to the second bolt tab, thereby clamping the first polygonal clamp half and the second polygonal clamp half about the rigid cylindrical duct, such that each of the first plurality of flat sides and the second plurality of flat sides bows outward in contact with the rigid cylindrical duct; and
the mounting piece is configured to affix at least one of the first polygonal clamp half and the second polygonal clamp half to the support structure.

12. The duct assembly of claim 11, wherein the mounting piece further comprises:
a structural attachment location (30,30B) configured to attach to the support structure;
a clamp connection point which (28,28B) attaches to the first polygonal clamp half; and
a body (26,26B) which extends from the structural attachment location to the clamp connection point.

13. The duct assembly of claim 12, wherein the rib or flange is welded to the structural attachment location.

14. The duct assembly of claim 12 or 13, wherein the structural attachment location is a flat plate with a bolt hole for screwing or bolting the mounting piece to the support structure.

15. The duct assembly of any of claims 11 to 14, wherein each flat side from the first and second pluralities of flat sides contacts the rigid cylindrical duct at a tangent point (tp) located at the center of the flat side.
